# EUROPEAN PATENT APPLICATION

(11) **EP 3 081 425 A1**
(43) Date of publication of application: **19.10.2016**
(21) Application number: 16164152.7
(22) Date of filing: 07.04.2016
(51) Int. Cl.: B60L 1/00, B60L 11/18, H02J 7/00

(54) **VEHICLE POWER MANAGEMENT DEVICE**

(30) Priority: 13.04.2015 KR 20150051998
(71) Applicant: LSIS Co., Ltd., Gyeonggi-Do 14119 (KR)
(72) Inventor: KIM, Young Min, 14119 Anyang-si, Gyeonggi-do (KR)
(74) Representative: Lang, Johannes

(57) **Abstract**

A vehicle power management device includes a high-voltage energy storage unit for storing continuous power and power charged in driving of a vehicle, a DC-DC converter for allowing power stored in the high-voltage energy storage unit to be applied or intercepting the application of the power, and acquiring data on components in the vehicle, to which the power is applied, and a power source for applying, to a load, power charged through the DC-DC converter, and charging a discharged voltage from the high-voltage energy storage unit.

## Description

### BACKGROUND

The present disclosure relates to a device for power management of a vehicle.

In general, hybrid vehicles are driven by efficiently combining at least two different power sources. The majority of hybrid vehicles include an engine obtaining power from a fuel and an electric motor driven by power from a battery.

As demand for loads of electric parts driven using a battery as an energy source in a vehicle increases, energy applied to the electric parts becomes short depending on an amount of power from the battery.

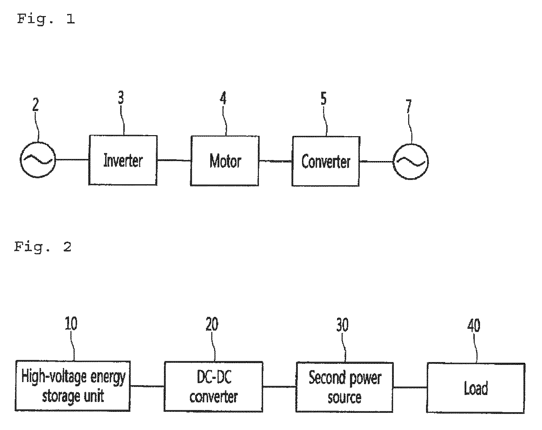

Fig. 1 is a configuration diagram illustrating internal blocks of a typical hybrid vehicle.

Referring to Fig. 1, the typical hybrid vehicle includes a motor 4, and an AC power source 2, an inverter 3, and a converter 5, which are used to drive the motor 4. The typical hybrid vehicle may further include a secondary battery 7 for applying power to electric parts.

The secondary battery 7 may be configured as a battery having a certain capacity, typically a lead (PbSo₄) battery. The secondary battery 7 functions to apply energy to electric parts except parts for engine driving in the vehicle.

However, in the case of a secondary battery providing an energy source having a certain capacity, as the number of high-load electric parts increases in a vehicle, a voltage drop occurs in the generation of a load exceeding the capacity of the secondary battery, which may have bad influence on the stability of an electric system. In addition, lead batteries frequently used for the existing secondary batteries have a short lifespan, and each of the lead batteries has a large volume occupied in a vehicle. Hence, the lead battery requires periodic maintenance and repair, and may have negative influence on stability of other electric parts and reduction in weight and size of the vehicle.

### SUMMARY

Embodiments provide a vehicle power management device for stably supplying driving energy to electric parts in a vehicle.

Embodiments also provide a vehicle power management device for diversity of energy sources in a vehicle and reduction in size and weight of the vehicle corresponding to the diversity.

The technical objects to be accomplished by the present disclosure are not limited to the above-mentioned objects and other technical objects that have not been mentioned above will become more evident to those skilled in the art from the following description.

In one embodiment, a vehicle power management device includes: a high-voltage energy storage unit configured to store continuous power and power charged in driving of a vehicle; a DC-DC converter configured to allow power stored in the high-voltage energy storage unit to be applied or intercept the application of the power, and acquire data on components in the vehicle, to which the power is applied; and a power source configured to apply, to a load, power charged through the DC-DC converter, and charge a discharged voltage from the high-voltage energy storage unit.

The details of one or more embodiments are set forth in the accompanying drawings and the description below. Other features will be apparent from the description and drawings, and from the claims.

### BRIEF DESCRIPTION OF THE DRAWINGS

Fig. 1 is a configuration diagram illustrating internal blocks of a typical hybrid vehicle.
Fig. 2 is a configuration diagram illustrating internal blocks of a vehicle according to an embodiment.
Fig. 3 is a configuration diagram illustrating a simplified equivalent circuit of the internal blocks of the vehicle shown in Fig. 2.
Fig. 4 is a configuration diagram illustrating internal blocks of a DC-DC converter power unit according to the embodiment.
Fig. 5 is a flowchart illustrating an energy supply operation of the vehicle according to the embodiment.
Fig. 6 is a flowchart illustrating a charging operation of a second power source according to the embodiment.

### DETAILED DESCRIPTION OF THE EMBODIMENTS

Hereinafter, exemplary embodiments will be described in detail with reference to the accompanying drawings. The technical objective of embodiments is not limited to the aforementioned technical problem, and technical problems not mentioned above can be clearly understood by a person skilled in the art by the disclosure below.

Fig. 2 is a configuration diagram illustrating internal blocks of a vehicle according to an embodiment.

Referring to Fig. 2, the vehicle according to the embodiment includes a high-voltage energy storage unit 10, a DC-DC converter 20, a second power source 30, and a load 40.

The high-voltage energy storage unit 10 may receive high-voltage and large-capacity electric energy applied from a motor or inverter of the vehicle and store the received electric energy. The high-voltage energy storage unit 10 may be connected to an input of the DC-DC converter 20.

The DC-DC converter 20 may receive power supplied from the high-voltage energy storage unit 10, drop the voltage of the power, convert the voltage into a DC voltage, and apply the DC voltage to the second power source 30 and the load 40.

The second power source 30 may be charged by the power applied from the DC-DC converter 20. The second power source 30 may operate as an energy source of the load 40 according to a charging state thereof.

The load 40 may include various electric parts inside the vehicle. The load 40 may include components for driving the vehicle and providing user information except the motor. The load 40 may simultaneously or independently receive energy from the high-voltage energy storage unit 10 and the second power source 30 through the DC-DC converter 20 according to an energy source stored in the high-voltage energy storage unit 10 or a state of the second power source 30.

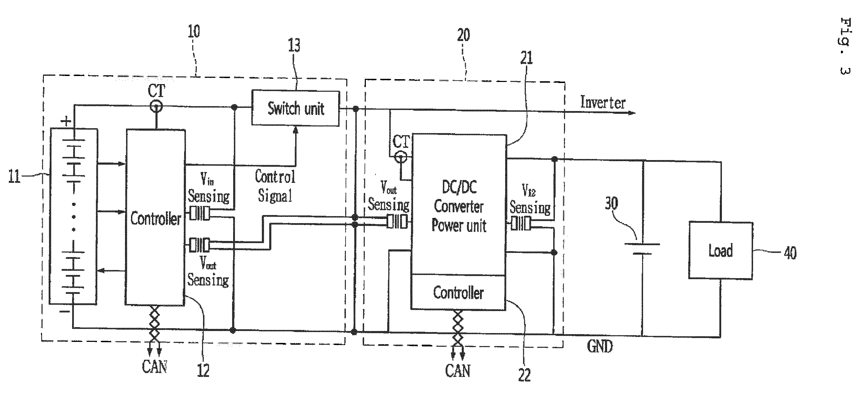

Hereinafter, the components of Fig. 2 will be described in detail with reference to Fig. 3.

Fig. 3 is a configuration diagram illustrating a simplified equivalent circuit of the internal blocks of the vehicle shown in Fig. 2.

Referring to Fig. 3, the high-voltage energy storage unit 10 may include a power source unit 11, a controller 12, and a switch unit 13.

The power source 11 of the high-voltage energy storage unit 10 may be configured such that at least one power source is connected in series. The power source unit 11 may store power applied under control of the controller 12 and apply the power to the DC-DC converter 20.

The controller 12 may sense power applied to the power source unit 11 and control the application of power to the DC-DC converter 20 and the electric parts. The controller 12 may apply power to the DC-DC converter 20 and control a voltage having a threshold value to be applied to the load 40. The controller 12 may allow power to be applied to the load 40 or intercept the application of the power to the load 40 by controlling the switch unit 13. The controller 12 may allow power to be applied to the load 40 or intercept the application of the power to the load 40 through control of the switch unit 13 according to an operation state of the load 40.

The DC-DC converter 20 may receive a voltage output from the high-voltage energy storage unit 10 and output the voltage to the second power source 30. The DC-DC converter 20 may include a DC-DC converter power unit 21 and a controller 22.

The DC-DC converter power unit 21 may receive power applied from the high-voltage energy storage unit 10 and allow the load 40 and the motor to be driven by the applied power. The DC-DC converter power unit 21 may allow power applied from the high-voltage energy storage unit 10 to be applied to the load or intercept the application of the power to the load 40 under control of the controller 22. That is, the DC-DC converter power unit 21 may output power applied from the high-voltage energy storage unit 10 or intercept the output of the power according to an operation request voltage of the load 40, sensed by the controller 22.

The controller 22 may detect state information of the load 40 with respect to power applied from the high-voltage energy storage unit 10. The controller 22 may allow the power to be output to the load 40 or intercept the output of the power to the load 40.

The second power source 30 may apply power to the load 40 together with power output from the high-voltage energy storage unit 10. The second power source 30 may be charged by power output from the high-voltage energy storage unit 10, and may discharge the charged power to the load 40 according to an operation state of the load 40.

The second power source 30 is an ultrahigh-capacity storage battery, and may be, for example, an ultra capacitor or super capacitor. Unlike batteries using chemical reactions, the ultrahigh-capacity storage battery may be charged by movement of ions to an interface between an electrode and an electrolyte or a surface chemical reaction. Accordingly, the ultrahigh-capacity storage battery can be charged at high speed, and has high charging/discharging efficiency and semi-permanent cycle lifespan. Thus, according to the embodiment, the ultrahigh-capacity storage battery used as the secondary battery 30 can be charged by a voltage applied from the high-voltage energy storage unit 10. When the load 40 requires more than the power output from the high-voltage energy storage unit 10, the ultrahigh-capacity storage battery can discharge the power stored in the second power source 30 to the load 40.

In the above, the internal blocks of the vehicle including the second power source 30 according to the embodiment have been described. Hereinafter, components and operations of the DC-DC converter power unit 21 of the DC-DC converter 20, connected to the high-voltage energy storage unit 10 and the second power source 30, will be described in detail.

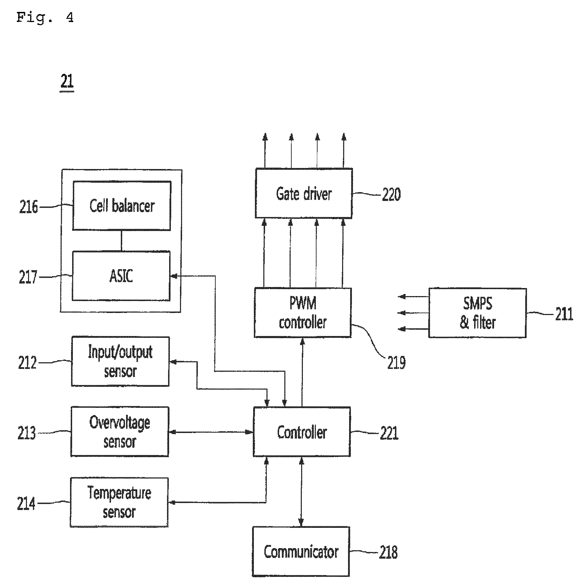

Fig. 4 is a configuration diagram illustrating internal blocks of the DC-DC converter power unit according to the embodiment.

Referring to Fig. 4, the DC-DC converter power unit 21 of the DC-DC converter 20, which has an input connected to the high-voltage energy storage unit 10 and an output connected to the second power source 30 and the load 40, may include an SMPS & filter 211, an input/output sensor 212, an overvoltage sensor 213, a temperature sensor 214, a cell balancer 216, an ASIC 217, a communicator 218, a PWM controller 219, a gate driver 220, and a controller 221.

The SMPS & filter 211 may include a filter for reducing noise with respect to a voltage applied from the high-voltage energy storage unit 10. The SMPS & filter 211 may filter a voltage applied from the high-voltage energy storage unit 10, and may be connected to the controller 221, the sensors, and the like to supply required power to them.

The input/output sensor 212 may be configured with at least one input/output port. The input/output sensor 212 may perform inputting on various sensing result values in the vehicle and encoding or modulation on the input values. The input/output sensor 212 may output, to the controller 221, input data and processing result information corresponding to the input data. The input/output sensor 212 may receive information on state operations input from the load 40, charging/discharging information of the second power source 30, and the like. The input/output sensor 212 may allow power from the high-voltage energy storage unit 10 to be applied to the second power source 30 or intercept the application of the power to the second power source 30 on the basis of the received information.

The overvoltage sensor 213 may sense whether a voltage applied from the high-voltage energy storage unit 10 and a current corresponding to the voltage exceed reference values, respectively. The overvoltage sensor 213 may sense whether the applied voltage exceeds a predetermined threshold value and output the sensed result value to the controller 221. The overvoltage sensor 213 may perform a protective operation against overvoltage and overcurrent under control of the controller 221.

The temperature sensor 214 may sense a temperature of each of loads and other components in a drive state or a sleep state. When the sensed temperature exceeds a predetermined threshold temperature of each of the components (loads), the temperature sensor 214 may perform an operation for reducing the temperature. That is, the temperature sensor 214 may set a temperature coefficient on the basis of various result values, so as to reduce a resistance value caused by an increase in temperature. The temperature coefficient may be varied depending on a sensed temperature. In addition, the controller 221 may drive a fan according to a result value of the temperature sensor 214.

The cell balancer 216 may sense state information such as a voltage or temperature of a cell and perform cell balancing by modularizing the sensed data in the ASIC 217. That is, the cell balancer 216 may collect and process the sensed data such that the controller 221 senses state information of the cell and acquires information corresponding to the sensed state information of the cell.

The communicator 218 may acquire energy state information of driving and power units in the vehicle and output the energy state information to an upper controller. The communicator 218 may receive information on control signals and processing data received from upper controllers (devices). Particularly, the communicator 218 may output receive state information of the load 40 and output the state information to the controller 221. The communicator 218 may allow power applied from the high-voltage energy storage unit 10 to be applied to the load 40 or intercept the application of the power to the load 40. The communicator 218 may be a module for performing controller area network (CAN) communication. However, the communicator 218 may be configured with various modules for performing data communication with the interior and exterior of the vehicle, in addition to the module for performing the CAN communication.

The controller 221 may calculate voltage and current values for the DC-DC converter 20 and control the DC-DC converter 20 on the basis of the calculated result values. An output of the controller 221 may be connected to the PWM controller 219 and the gate driver 220 so as to control the DC-DC converter 20.

The controller 221 may sense a state of the load 40. The controller 221 may allow a voltage applied from the high-voltage energy storage unit 10 to be applied to the load 40 or intercept the application of the voltage to the load 40, based on the state of the load 40. The controller 221 may control a mode of the DC-DC converter 20 to be changed to a sleep mode or a drive mode. That is, when the DC-DC converter 20 is operated in the sleep mode or the drive mode according to a charging/discharging state of the second power source 30, the controller 221 may control the second power source 30 to be charged by power applied from the high-voltage energy storage unit 10.

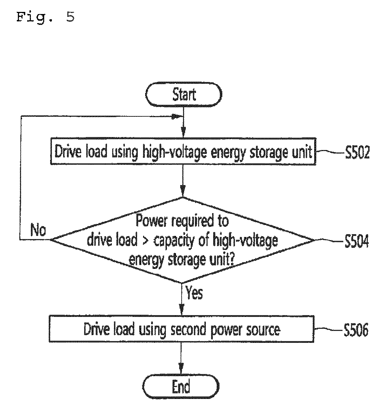

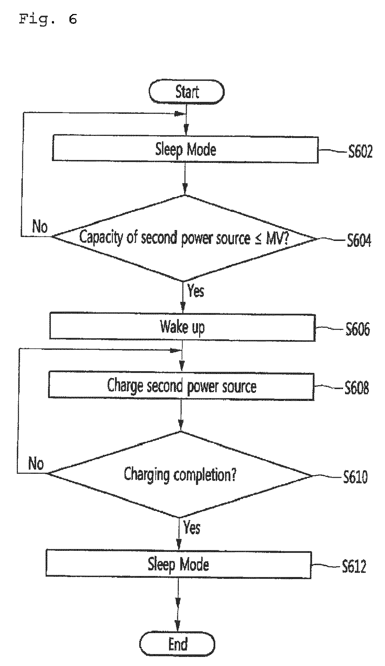

Hereinafter, some operations of the vehicle including the second power source according to the embodiment will be described in detail with reference to Figs. 5 and 6.

Fig. 5 is a flowchart illustrating an energy supply operation of the vehicle according to the embodiment.

Referring to Fig. 5, the controller 22 of the DC-DC converter 20 may allow power applied from the high-voltage energy storage unit 10 to be applied to the load 40 such that the load 40 can be driven by the power of the high-voltage energy storage unit 10 (S502).

The controller 22 may determine whether power required by the load 40 has exceeded the power applied from the high-voltage energy storage unit 10 (S504). The controller 22 may sense a state of the load 40 and control the load 40 to be driven by the second power source 30 when power required to drive the load 40 exceeds the power applied from the high-voltage energy storage unit 10 (S506). That is, the controller may control the load 40 to be driven by only the second power source 30, or may control power obtained by adding the power of the second power source 30 to the power applied from the high-voltage energy storage unit 10 to be applied to the load 40.

Also, the controller 22 may monitor a state of the second power source 30, in addition to application of power to the load 40 and the interception of the application.

Fig. 6 is a flowchart illustrating a charging operation of the second power source according to the embodiment.

In a sleep mode in which the starting of the vehicle is off (S602), the controller 22 of the DC-DC converter 20 may continuously monitor a charging/discharging state of the second power source 30.

The controller 22 may determine whether the capacity of the second power source 30 has been discharged to a reference power capacity Mv or less (S604).

When the capacity of the second power source 30 is discharged to the reference power capacity Mv or less, the controller 22 may control an operation state of each of some components to be changed from the sleep mode to a wake-up mode (S606). That is, the controller 22 may output, to an upper controller, a request signal for allowing an operation state of each of the whole or some of the components in the vehicle to be changed from the sleep mode to the wake-up mode.

The components, each of which operation state is changed from the sleep mode to the wake-up mode, may be the whole of the components in the vehicle, or the high-voltage energy storage unit, the controller, and some components required to perform charging/discharging.

The controller 22 may control the high--voltage energy storage unit 10 of which operation state is changed from the sleep mode to the wake-up mode to apply power for charging the second power source 30. That is, in order to charge the discharged second power source 30, the controller 22 may control power output from the high-voltage energy storage unit 10 to be applied to the second power source 30 (S608).

The controller 22 may determine whether the charging of the second power source 30 has been completed by the high-voltage energy storage unit 10 (S610). The controller 22 may control the operation state of each of the components operated in the wake-up mode is changed to the sleep mode (S612).

Therefore, the second power source 30 may discharge the charge power in response to a request of the load 40 in the operation state, and may be charged by the power applied from the high-voltage energy storage unit 10.

According to the present disclosure, an effective energy source can be supplied to the electric parts in the vehicle, and accordingly, the stability of vehicle driving can be achieved. In addition, the lifespan of the battery in the vehicle can be extended, and the weight of the battery can be reduced. Thus, it is possible to maximize user's satisfaction and aesthetic effect of the vehicle.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A vehicle power management system, comprising:
a high-voltage energy storage unit configured to store continuous power and power charged in driving of a vehicle;
a DC-DC converter configured to allow power stored in the high-voltage energy storage unit to be applied or intercept the application of the power, and acquire data on components in the vehicle, to which the power is applied; and
a power source configured to apply, to a load, power charged through the DC-DC converter, and charge a discharged voltage from the high-voltage energy storage unit.

2. The vehicle power management device according to claim 1, wherein the high-voltage energy storage unit comprises a switch unit configured to allow power to be applied to the DC-DC converter or intercept the application of the power.

3. The vehicle power management device according to claim 1, wherein the DC-DC converter comprises:
a DC-DC converter power unit configured to be operated by power applied from the high-voltage energy storage unit, and acquire and output state information of the vehicle; and
a controller configured to control an operation of the DC-DC converter power unit, and perform control for allowing power applied from the high-voltage energy storage unit to be applied to the load or intercepting the application of the power.

4. The vehicle power management device according to claim 1, wherein the DC-DC converter comprises:
an input/output sensor configured to acquire state information of the load and state information of a second power source;
a communicator configured to output a control signal for driving the second power source, based on the acquired information; and
a controller configured to generate a control signal for controlling the driving of the second power source, based on the information acquired from the input/output sensor.

5. The vehicle power management device according to claim 1, wherein the DC-DC converter monitors a charging/discharging state of the second power source when the DC-DC converter is operated in a sleep mode.

6. The vehicle power management device according to claim 5, wherein, if the second power source is discharged, the DC-DC converter changes the sleep mode to a wake-up mode, and allows power applied from the high-voltage energy storage unit to be applied to the second power source.

7. The vehicle power management device according to claim 1, wherein the DC-DC converter applies, to the load, a voltage applied from the high-voltage energy storage unit or power of the second power source.

8. The vehicle power management device according to claim 7, wherein power obtained by adding the power of the second power source to the power applied from the high-voltage energy storage unit is applied to the load.
